# EUROPÄISCHE PATENTANMELDUNG

(11) **EP 2 662 229 A2**
(43) Veröffentlichungstag der Anmeldung: **13.11.2013**
(21) Anmeldenummer: 13167009.3
(22) Anmeldetag: 08.05.2013
(51) Int. Cl.: B60J 5/06

(54) **Einrichtung zum Spannen einer LKW-Plane**

(30) Priorität: 08.05.2012 DE 102012008906
(71) Anmelder: Fahrzeugbau Karl Tang GmbH, 40721 Hilden (DE)
(72) Erfinder: Böckmann, Udo, 42653 Solingen (DE)
(74) Vertreter: Isfort, Olaf

(57) **Zusammenfassung**

Die Erfindung betrifft eine Spanneinrichtung (10) zum Verspannen einer Abdeckplane (20) an der seitlichen Begrenzung einer Ladefläche eines Fahrzeugs, mit einem beweglichen Element (11) zum Erzeugen einer Spannung in der Abdeckplane (20), wobei das bewegliche Element (11) dazu ausgebildet ist, auf die Abdeckplane (20) eine Zugkraft derart auszuüben, dass die Abdeckplane (20) flächig verspannt wird. Aufgabe der Erfindung ist es, eine verbesserte Möglichkeit zum Verspannen der Abdeckplane (20) zu schaffen. Diese Aufgabe löst die Erfindung dadurch, dass das bewegliche Element (11) eine variable Außenkontur aufweist. Insbesondere kann das bewegliche Element (11) durch Fluidbeaufschlagung (z.B. Druckluft) expandierbar sein. Außerdem betrifft die Erfindung ein Ladungssicherungssystem für ein Fahrzeug, mit einer Abdeckplane (20) und mit einer Spanneinrichtung (10) der zuvor angegebenen Art, wobei die Abdeckplane (20) freie Kopplungselemente (22) aufweist, die dazu ausgebildet sind, an der Ladefläche des Fahrzeugs verkoppelt zu werden.

## Beschreibung

Die Erfindung betrifft Abdeckplanen, wie z.B. LKW-Planen, insbesondere eine Einrichtung zum Spannen einer Abdeckplane.

Beim Transport von Ladegütern auf Straßen, Schienen oder über Wasserwege müssen die Ladegüter vor Witterungseinflüssen oder z.B. auch Fahrtwind geschützt werden. Abdeckungen für Ladeflächen, seien es Planen, allgemein Gewebe mit eingezogenen Gurten, oder sonstige Schutzvorrichtungen, werden daher üblicherweise aus einem belastbaren und strapazierfähigen Material hergestellt. Sie müssen robust sein, eine lange Lebensdauer aufweisen und sich dazu eignen, Transportgut vor Wind, Feuchtigkeit, Strahlung oder sonstigen Witterungseinflüssen zu schützen. Sie haben neben einer Wetterschutz-Funktion meist auch eine Ladungssicherungs-Funktion. Die Materialien sind daher meist recht schwer bzw. sperrig, weisen also ein hohes Gewicht pro Fläche auf, und sind häufig nicht auf einfache Weise verstaubar oder zusammenfaltbar. Auch ein Überwerfen über eine Ladefläche, um eine der Seiten der Ladefläche freizugeben, ist aufgrund des Gewichts der Abdeckungen meist nicht auf einfache Weise möglich, insbesondere nicht bei LKW-Planen. Dies auch deshalb, weil diese Abdeckungen zum einen gegenüber hohen Fahrtwinden und damit möglicherweise einhergehendem Schlagen bzw. Flattern beständig sein müssen, zum anderen auch recht großen Zugspannungen standhalten müssen, denn sie werden üblicherweise mit der Ladefläche unter für Planen bzw. Gewebe relativ hohen Zugkräften flächig verspannt.

Als eine technische Lösung haben sich speziell für Lastkraftwagen oder Anhänger so genannte Curtain-Sider verbreitet, bei welchen eine Plane über einem auf der Ladefläche angeordneten Rahmen verspannt wird. Die Ladefläche ist meist von einem Dach überdeckt, und die Seiten und gegebenenfalls auch das Heck werden von einer Plane bzw. einzelnen Planen abgedeckt. Die Plane kann meist wie ein Vorhang seitlich verschoben werden, muss aber für den Transport fixiert und gesichert werden. Dazu ist es erforderlich, die Plane gleichförmig und mit einer bestimmten Spannung an dem Rahmen bzw. der Ladefläche selbst zu verzurren. Hierbei werden häufig so genannte Übertotpunkt-Spanner eingesetzt, mittels welchen innerhalb der Plane verlaufende Spanngurte jeweils einzeln auf eine bestimmte Zugspannung gebracht werden können. Meist sind diese Gurte innerhalb der Plane angeordnet und mit der Plane verschweißt, wenn dies das Material der Plane zulässt. Bei Curtain-Sidern kann es vorkommen, dass sich einzelne Gurte lösen oder aufgrund der Vielzahl an Gurten ein Verspannen einiger Gurte unterbleibt. Ein weiterer Nachteil ist, dass die Übertotpunkt-Spanner seitlich über den Rahmen der Ladefläche überstehen und beim Rangieren abgefahren werden. Eine Seite einer Ladefläche komplett freizulegen ist zeitlich aufwendig, da dazu eine Vielzahl an Spannern gelöst werden muss. Bei der Fixierung der Plane ist es aufwendig, jeden einzelnen Gurt mit dem entsprechenden Spanner bzw. der Ladefläche zu verbinden.

Falls die Übertotpunkt-Spanner nicht zum Einsatz kommen sollen, bietet sich wahlweise ein Verspannen mittels einer Einrichtung an, an welche jeder einzelne der Gurte gekoppelt wird, um dann durch eine Bewegung der Einrichtung ein gemeinsames simultanes Verzurren aller Gurte zu ermöglichen. Hierbei kann ein Verbinden jedes einzelnen Gurtes mit der Einrichtung z.B. dadurch erfolgen, dass an den Gurten jeweils Ösen, Schlaufen oder Augen vorgesehen sind, welche in Haken oder Klemmen oder dergleichen Beschläge eingehakt werden. Die entsprechenden Haken können dann z.B. an einer drehbaren Welle angebracht sein, die entlang des bodenseitigen Ladeflächenrahmens drehbar gelagert ist. Durch Verdrehen der Welle kann die Plane verspannt werden.

Aufgabe der Erfindung ist es, eine verbesserte Möglichkeit zum Verspannen einer Abdeckplane bereitzustellen.

Diese Aufgabe wird durch eine Spanneinrichtung gemäß Anspruch 1 gelöst.

Die erfindungsgemäße Spanneinrichtung ist dazu vorgesehen, eine Abdeckplane, z.B. eine LKW-Plane zum Abdecken einer Ladefläche, mittels eines beweglichen Elements zu verspannen (durch Erzeugen einer Spannung in der Abdeckplane), wobei das bewegliche Element dazu ausgebildet ist, auf die Abdeckplane eine Zugkraft auszuüben. Wesentlich ist dabei, dass das bewegliche Element eine variable Außenkontur hat.

Bevorzugt ist die Spanneinrichtung dazu ausgebildet, die Spannung zu erzeugen, indem sie die Außenkontur des beweglichen Elements verändert. Die Abdeckplane wird zunächst lose fixiert. Dabei kommt sie an dem beweglichen Element der Spanneinrichtung zur Anlage. Die Veränderung der Außenkontur bewirkt dann die Erzeugung eine Zugspannung innerhalb der Abdeckplane. Bei dem beweglichen Element kann es sich zum Beispiel um einen durch Fluidbeaufschlagung expandierbaren Schlauch oder ein oder mehrere expandierbare Polster handeln, die am Rahmen der Ladefläche befestigt sind. Bevorzugt ist das bewegliche Element in montiertem Zustand der Spanneinrichtung zwischen der Abdeckplane und einem feststehenden Rahmenteil der Ladefläche angeordnet. Bei Expansion der Spanneinrichtung wird der Abstand zwischen Rahmenteil und Abdeckplane vergrößert. Da die Abdeckplane an ihren Enden an dem Aufbau der Ladefläche fixiert ist, wird dabei die gewünschte Spannung in der Abdeckplane aufgebaut.

Die Ausgestaltung des beweglichen Elements als durch Fluidbeaufschlagung expandierbaren Schlauch oder dergleichen hat den Vorteil, dass der Fluiddruck in dem beweglichen Element überall gleich groß ist. Damit wird die Spannung über die gesamte Länge der Abdeckplane gleichmäßig erzeugt. Faltenbildung und Flattern der Abdeckplane werden vermieden.

Bei der erfindungsgemäßen Spanneinrichtung können die bisher gebräuchlichen Übertotpunktspanner entfallen. Dies wirkt sich positiv auf die Aerodynamik und damit auf den Kraftstoffverbrauch und den CO₂-Ausstoß aus.

Das bewegliche Element der erfindungsgemäßen Spanneinrichtung kann so (unten oder oben) am Fahrzeugrahmen angeordnet sein, dass eine Spannung in vertikaler Richtung, d.h. z.B. von unten ziehend, aufgebaut wird. Alternativ oder ergänzend kann das bewegliche Element seitlich am Fahrzeugrahmen angeordnet sein, um eine Spannung in horizontaler Richtung, d.h. von hinten oder vorne ziehend, zu erzeugen. Dabei ist die Abdeckplane an dem dem beweglichen Element jeweils gegenüberliegenden Ende des Fahrzeugrahmens fixiert.

Bei einer bevorzugten Ausgestaltung der Erfindung ist ein Kopplungselement vorgesehen, das ein mit dem Fahrzeug, z.B. mit dem der Ladefläche zugeordneten Fahrzeugrahmen, fest verbundenes Element bzw. Bauteil ist, über welches die Abdeckplane im Bereich der Ladefläche fixiert werden kann. Das Kopplungselement kann z.B. ein Gurt oder ein Haken oder eine Öse sein. Als feststehendes bzw. ortsfestes Kopplungselement kommt bevorzugt ein Element zum Einsatz, welches fix an dem Fahrzeug angeordnet ist und dazu ausgebildet ist, Lagerkräfte aufzunehmen. Das feststehende Kopplungselement kann z.B. als Profilschiene oder als sich entlang der Ladefläche erstreckender Vorsprung oder Absatz ausgebildet sein. Das feststehende Kopplungselement kann als ein profiliertes Element mit einem nach oben offenen Profil ausgeführt sein. Das Profil kann z.B. als ein U-Profil oder ein L-Profil ausgebildet sein.

Es können z.B. überall dort, wo Gurte mit ihren freien Enden aus der Abdeckplane austreten, einzelne feststehende Kopplungselemente vorgesehen sein, jedoch bietet die Ausführung als Schiene oder irgendeines anderen einzelnen lang gestreckten Elementes den Vorteil, dass Haken oder sonstige Beschläge der Abdeckplane auf einfache Weise mit dem Kopplungselement verbunden werden können, nämlich auch "blind", d.h. ohne Hinsehen oder Tasten, sondern allein durch eine Art Einwerfen oder Eindrehen oder Einschleudern, was schnell und ohne besondere Aufmerksamkeit erfolgen kann.

Bei einer bevorzugten Ausgestaltung der Erfindung ist das bewegliche Element dazu ausgebildet ist, in montiertem Zustand der Spanneinrichtung unterhalb der Ladefläche angeordnet zu sein und die Abdeckplane ausschließlich auf einer Innenseite zu kontaktieren. Als Innenseite ist dabei bevorzugt diejenige Seite der Abdeckplane zu verstehen, die zur Ladefläche hin weist, also nicht die sichtbare Seite außen. Dadurch kann die Spanneinrichtung über das bewegliche Element eine Kraft auf die Abdeckplane ausüben, insbesondere eine Kraft nach unten, die zu einer Zugbeanspruchung über die gesamte Fläche der Abdeckplane führt.

Gemäß einer Ausführungsform der Erfindung ist das bewegliche Element in montiertem Zustand der Spanneinrichtung ortsfest mit einer Ladeflächenvorrichtung verbunden. Die Spanneinrichtung bzw. das bewegliche Element kann dabei dazu ausgebildet sein, das Verspannen dadurch hervorzurufen, dass es die Abdeckplane mit einer Pressfläche flächig kontaktiert und die Pressfläche auf einen vergrößerten Abstand zur Ladeflächenvorrichtung bringt.

Gemäß einer bevorzugten Ausgestaltung erstreckt sich das bewegliche Element in montiertem Zustand der Spanneinrichtung entlang der Abdeckplane. Das bewegliche Element kann, wie erwähnt, z.B. als Schlauch ausgebildet sein und sich seitlich entlang der gesamten Ladefläche erstrecken. Bevorzugt erstreckt sich das bewegliche Element parallel zur Ladefläche entlang des Randes der Ladefläche. Ein als Schlauch ausgebildetes bewegliches Element kann an einer oder mehreren Seiten der Ladefläche angeordnet sein, um an jeder Ladeflächenseite die entsprechende Abdeckplane verspannen zu können.

Bei einer besonders bevorzugten Ausgestaltung ist das bewegliche Element expandierbar. Das bewegliche Element kann z.B. eine durch Druckluft expandierbare Einrichtung wie z.B. ein Kissen, ein Schlauch oder ein sonstiger mittels Fluid expandierbarer Körper dienen. Das expandierbare Element sollte elastische Materialeigenschaften aufweise und ohne die Fluidbeaufschlagung nach der Expansion selbsttätig in die ursprüngliche Form zurückkehren. Die Expansion kann durch eine Kupplung des beweglichen Elements an eine Fluidversorgung, insbesondere eine Druckluftversorgung eines LKW oder Anhängers erfolgen, sei es zeitweise während eines Belade- oder Löschvorgangs, sei es permanent. Hierzu können z.B. Kupplungselemente in Form von üblichen Steckverbindungen dienen. Zur Verspannung der Abdeckplane und zur Lösung der Verspannung (beim Be- und Entladen) sollte die Fluidbeaufschlagung schaltbar ein, z.B. mittels geeigneter Mehrwegeventile, die manuell oder elektrisch betätigbar sind.

Der Einsatz eines expandierbaren Schlauchs oder dergleichen als bewegliches Element, wobei die Abdeckplane mit Gurten oder Haken ausgestattet ist, die an eine am Fahrzeugrahmen befestigte Profilschiene oder dergleichen gekoppelt werden, ist besonders vorteilhaft, da auf diese Weise sichergestellt werden kann, dass auch im drucklosen Zustand, d.h. ohne Fluidbeaufschlagung, noch eine gewisse Spannung aufgebaut wird, die zumindest verhindert, dass sich die Gurte oder Haken im dynamischen Fahrbetrieb selbsttätig lösen. Hierzu kann der expandierbare Schlauch entsprechend elastisch ausgebildet sein. Ggf. sorgt schon das Eigengewicht des Schlauchs zusammenwirkend mit dem Eigengewicht der in der Profilschiene hängenden Haken dafür, dass die Verbindung nicht ungewollt gelöst wird.

Entsprechendes gilt für den Fall, dass auf der Ladefläche verrutschende Ladung in der Abdeckplane hängt. Bei der erfindungsgemäßen Lösung ist dafür gesorgt, dass selbst bei Ablassen des Fluids aus dem expandierbaren beweglichen Element die Abdeckplane über die Gurte oder Haken zusammenwirkend mit der Profilschiene immer noch hinreichend gesichert bleibt. Dadurch wird die Unfallgefahr erheblich reduziert.

Die der Erfindung zugrunde liegende Aufgabe wird auch durch ein Ladungssicherungssystem nach Anspruch 8 gelöst. Das System umfasst die zuvor beschriebene Spanneinrichtung sowie eine Abdeckplane, die freie Kopplungselemente aufweist, die dazu ausgebildet sind, an der Ladefläche des Fahrzeugs verkoppelt zu werden. Bevorzugt weist die Abdeckplane einen Abschnitt auf, an welchem die Spanneinrichtung anliegt, um eine Spannkraft in die Abdeckplane einzuleiten. Dabei kann die Abdeckplane das bewegliche Element, d.h. z.B. den am Ladeflächenrahmen montierten, expandierbaren Schlauch, teilweise umschließen, so dass das bewegliche Element zwischen einem ortsfesten Rahmenteil und der Abdeckplane angeordnet ist und einen Druck auf die Abdeckplane ausüben kann, ohne dass irgendwelche weiteren Komponenten bewegt werden müssten.

Bei einer bevorzugten Ausgestaltung des erfindungsgemäßen Ladungssicherungssystems weist dieses eine Ladeflächenvorrichtung (z.B. ein Fahrgestell eines LKW-Anhängers oder -Aufbaus mit Ladeflächenrahmen und mit darauf befindlichem Ladeboden) auf, an dem wenigstens ein feststehendes Kopplungselement vorgesehen ist, an welches die freien Kopplungselemente der Abdeckplane koppelbar sind. Gemäß einer bevorzugten Ausgestaltung ist das feststehende Kopplungselement als sich zumindest annähernd parallel zur Abdeckplane erstreckende Schiene ausgebildet, welche ein Profil zur Aufnahme der freien Kopplungselemente aufweist.

Durch das erfindungsgemäße System kann ein äußerst praktischer und effektiver Planenschnellverschluss bereitgestellt werden. Die Abdeckplane kann besonders schnell und einfach an der Ladefläche verspannt werden. Ebenso einfach kann die Verspannung zum Entfernen der Abdeckplane beim Be- und Entladen aufgehoben werden. Zum Verspannen wird zunächst die Abdeckplane um das bewegliche Element gelegt bzw. geworfen, wobei die freien Kopplungselemente der Abdeckplane an der Ladefläche verkoppelt werden. Dann wird die Außenkontur des beweglichen Elementes verändert, insbesondere verlagert und/oder im Umfang vergrößert, z.B. durch Fluidbeaufschlagung des expandierbaren beweglichen Elementes. Der Druck kann dann in dem Bereich, in dem das bewegliche Element die Abdeckplane kontaktiert, gleichförmig auf die Abdeckplane zum Verspannen derselben übertragen werden. Zum Lösen der Verspannung wird eine Druckentlastung herbeigeführt, indem das Fluid abgelassen wird.

In den nachfolgenden Zeichnungen werden Ausführungsbeispiele die Erfindung näher beschrieben. Es zeigen:
- Figur 1: eine Seitenansicht eines Anhängers mit einer Vielzahl von Übertotpunkt-Spannern zur Verspannung einer Abdeckplane;
- Figur 2: eine Heckansicht auf einen Fahrzeuganhänger mit erfindungsgemäßem Ladungssicherungssystem im unverspannten Zustand;
- Figur 3: eine Seitenansicht eines Anhängers mit erfindungsgemäßem Ladungssicherungssystem im unverspannten Zustand;
- Figur 4: das in Fig. 3 gezeigte Ausführungsbeispiel im verspannten Zustand;
- Figur 5: Heckansicht auf den Fahrzeuganhänger gemäß Figur 2 mit Ladungssicherungssystem im verspannten Zustand;
- Figur 6a: eine Detailansicht in Form einer Draufsicht auf ein bevorzugtes Ausführungsbeispiel der freien Kopplungselemente;
- Figur 6b: eine Detailansicht in Form einer Seitenansicht auf das in Fig. 6a gezeigte Ausführungsbeispiel der freien Kopplungselemente;
- Figur 7a: eine Detailansicht in Form einer Draufsicht von oben auf ein bevorzugtes Ausführungsbeispiel des feststehenden Kopplungselements;
- Figur 7b: eine Detailansicht in Form einer Schnittansicht auf das in Fig. 7a gezeigte Ausführungsbeispiel des feststehenden Kopplungselements;
- Figur 8: eine Detailansicht eines bevorzugten Ausführungsbeispiel der erfindungsgemäßen Spanneinrichtung, in einer Draufsicht auf die Unterseite einer Ladeflächenvorrichtung an welcher die Spanneinrichtung angebracht ist.

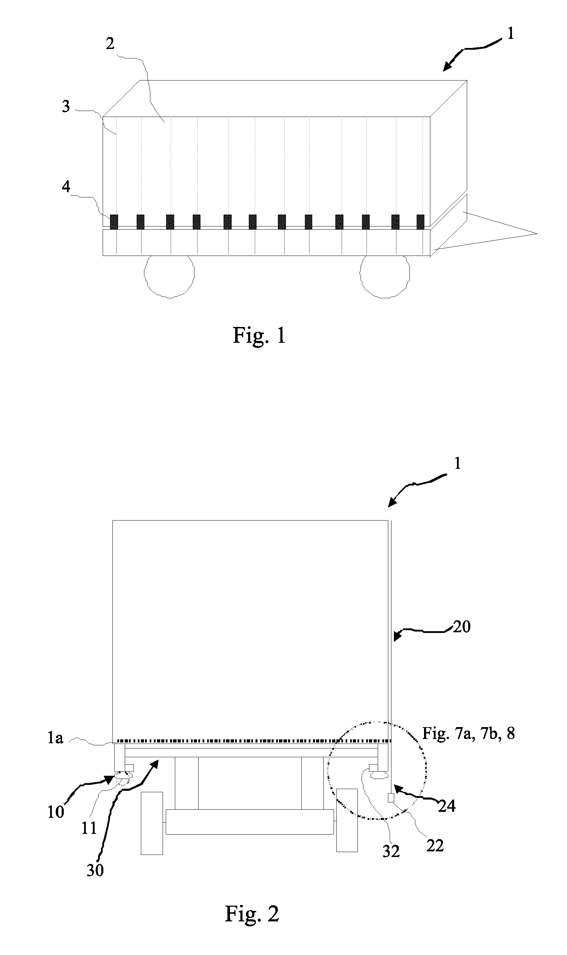

In der Fig. 1 ist ein Fahrzeuganhänger 1 gemäß dem Stand der Technik gezeigt, bei welchem die Ladefläche durch eine Plane 2 abgedeckt ist, die mittels Spanngurten 3 an einem Rahmen über der Ladefläche und seitlich unten neben der Ladefläche verspannt wird, indem jeder einzelne Spanngurt 3 über einen so genannten Übertotpunkt-Spanner 4 manuell auf eine bestimmte Zugkraft gebracht wird. Das Spannen der Spanngurte sowie das Lösen der Gurte von den Übertotpunkt-Spannern 4 erfordert Zeit und ist eine potentielle Fehlerquelle.

In der Fig. 2 ist ein bevorzugtes Ausführungsbeispiel einer erfindungsgemäßen Spanneinrichtung 10 gezeigt, die an der Unterseite eines stark vereinfacht gezeigten Fahrzeuganhängers 1 vorgesehen ist, insbesondere unterhalb einer Ladefläche 1a. Die Ladefläche 1a ist oberhalb einer Achse und den Rädern des Fahrzeuganhängers 1 angeordnet und an einem Träger befestigt, der Rahmenbestandteil einer Ladeflächenvorrichtung 30 ist. Bei dem gezeigten Fahrzeuganhänger 1 ist eine Spanneinrichtung 10 jeweils auf einer der Seiten vorgesehen, wenngleich der Übersicht halber nur auf der rechten Seite eine Abdeckplane 20 dargestellt ist. An der Abdeckplane 20 sind mehrere freie Kopplungselemente 22 vorgesehen, die hier nur durch ein einzelnes schematisch dargestelltes Element angedeutet sind. Gurte innerhalb der Abdeckplane 20 können wahlweise vorgesehen sein, jedoch können die freien Kopplungselemente 22 auch direkt an die Abdeckplane 20, d.h. die Plane oder das Textilgewebe gekoppelt sein, wahlweise durch Zwischenschalten eines freien Endes 24 aus einem anderen Material als der Rest der Abdeckplane 20. Als eine Komponente der Ladeflächenvorrichtung 30 ist auf jeder Seite ein feststehendes Kopplungselement 32 vorgesehen.

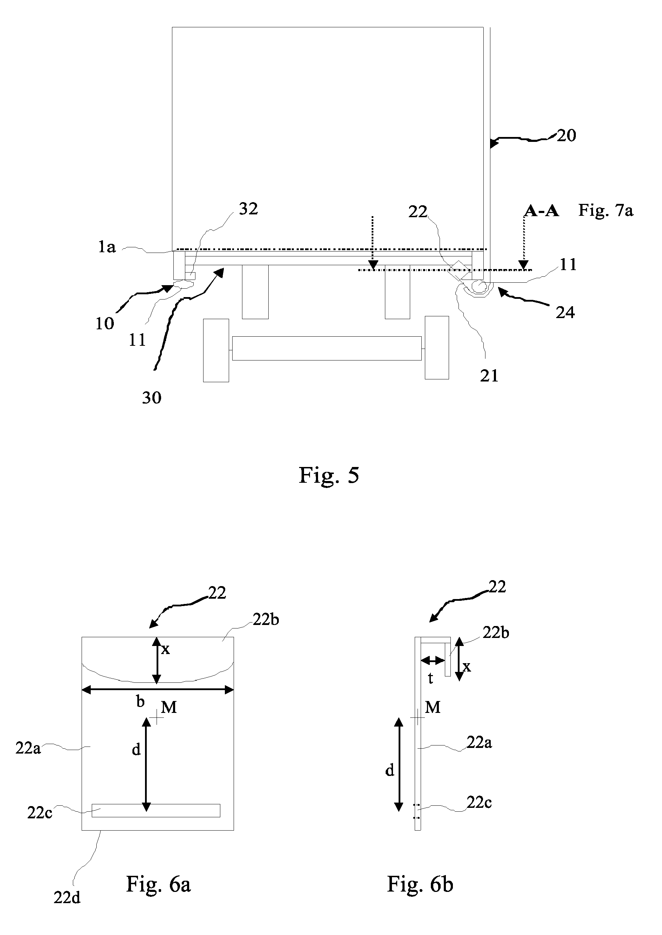

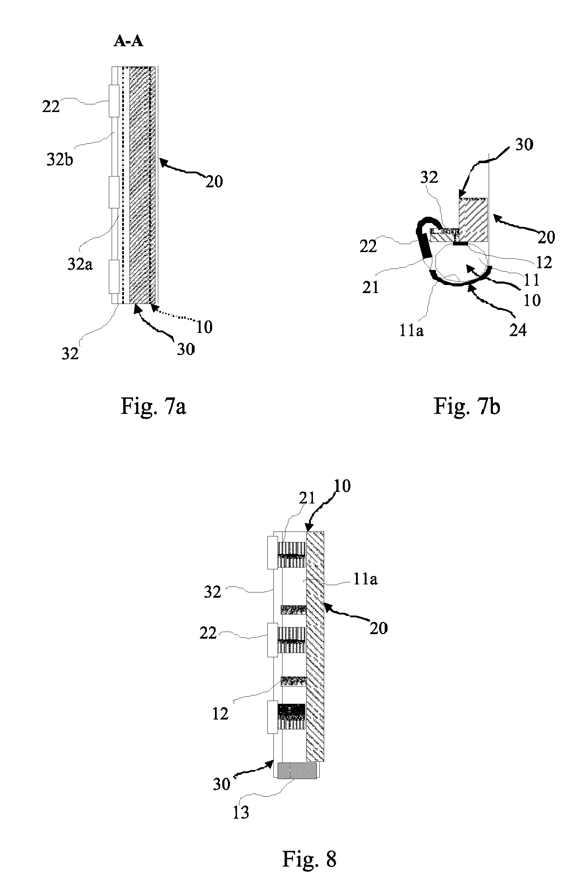

Die Spanneinrichtung 10 umfasst ein bewegliches Element 11, welches mit der Ladeflächenvorrichtung 30 verbunden ist und sich unterhalb der Ladeflächenvorrichtung 30 bzw. der Ladefläche 1a erstreckt. Um die Abdeckplane 20 zu verspannen, wird in einem ersten Schritt jedes der freien Kopplungselemente 22 mit der Ladeflächenvorrichtung 30, insbesondere dem feststehenden Kopplungselement 32, gekoppelt. Das bewegliche Element 11 wird dann in einem zweiten Schritt z.B. in die auf der linken Seite durch die gestrichelte Linie angedeutete Form gebracht (vgl. Fig. 5). Hierdurch wird die Abdeckplane 20 auf Zug gebracht, indem der Umfang des beweglichen Elements 11 vergrößert wird. Die Schnittstelle zwischen den freien Kopplungselementen 22 und dem feststehenden Kopplungselement 32 wird wie durch den gestrichelten Kreis angedeutet im Zusammenhang mit den Fig. 7a, 7b näher erläutert. Mit anderen Worten besteht das bevorzugte Ausführungsbeispiel aus einer Spanneinrichtung 10, welche ein bewegliches Element 11 in Form eines länglichen, schlauchartigen expandierbaren Körpers aufweist.

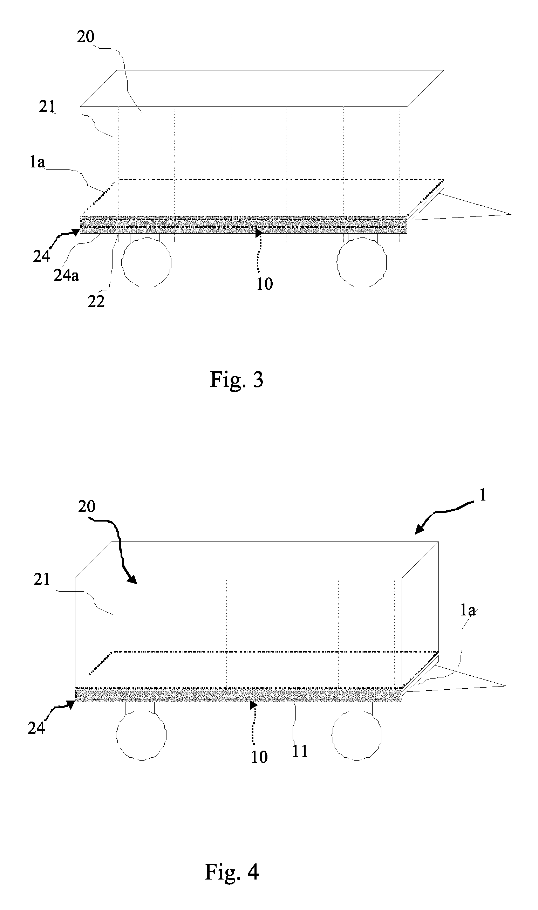

In der Fig. 3 ist ein Ausführungsbeispiel mit einer Abdeckplane 20 gezeigt, die an einer Seite eines Fahrzeuganhängers 1 vorgesehen ist. Die Abdeckplane 20 ist in einem nicht verspannten Zustand dargestellt. Die Abdeckplane 20 weist Gurte 21 auf, die mit dem Planenmaterial verschweißt sind und sich zumindest annähernd vertikal erstrecken. Die Gurte sind bis zu dem Bereich 24 am unteren Ende 24 der Abdeckplane 20 geführt, wahlweise bis zum unteren Rand 24a. An den Gurten 21 oder direkt an am Planenrand 24a sind freie Kopplungselemente 22 vorgesehen, insbesondere in Form von Haken. Sie hängen wie dargestellt an dem Planenende 24 herunter und können dort von einem Bediener ergriffen werden. Gestrichelt dargestellt, da verdeckt durch die Abdeckplane 20, ist eine sich längs hinter der Abdeckplane 20 erstreckende Spanneinrichtung 10. Die Spanneinrichtung 10 ist unterhalb einer ebenfalls gestrichelt dargestellten Ladefläche 1a des Fahrzeuganhängers 1 angeordnet.

In der Fig. 4 ist gezeigt, dass im fertig verspannten Zustand keine Spanner oder sonstige Beschläge von der Abdeckplane 20 vorstehen. Die Abdeckplane 20 erscheint vollkommen glatt. Die in der Fig. 3 gezeigten freien Kopplungselemente 22 (Haken) sind unterhalb der Ladefläche 1a hinter der Abdeckplane 20 mit dem Fahrzeuganhänger 1 verbunden und das freie Ende 24 ist manschettenartig um die Spanneinrichtung 10 gelegt. Die Spanneinrichtung 10 kann nun zwischen der Ladeflächenvorrichtung 30 (d.h. der Rahmenkonstruktion des Anhängers 1) und der Abdeckplane 20 auf die Abdeckplane 20 einen Druck ausüben, der zu einer Spannung innerhalb der Abdeckplane 20 führt. Hierzu ist die Spanneinrichtung 10, wie erwähnt, reversibel expandierbar, insbesondere durch Druckluftbeaufschlagung.

In der Fig. 5 ist schematisch gezeigt, auf welche Weise das Verspannen erfolgt. Das rechts dargestellte bewegliche Element 11 ist expandiert und presst sich zwischen die Ladeflächenvorrichtung 30 und die Abdeckplane 20 im Bereich 24. Die freien Kopplungselemente 22 sind mit dem feststehenden Kopplungselement 32 verbunden. Dabei wird eine Verspannkraft flächig in die gesamte Abdeckplane 20 eingeleitet. Die Art und Weise, in der die freien Kopplungselemente 22 mit dem feststehenden Kopplungselement 32 verbunden werden, hängt von der Ausgestaltung dieser Schnittstelle ab, kann jedoch jedenfalls auf einfache Weise durch Untergreifen der Spanneinrichtung 10 und Einhängen der freien Kopplungselemente 22 (Haken) in das feststehende Kopplungselement 32 erfolgen. Bei einem Ausführungsbeispiel (vgl. Fig. 6, 7 und 8) können die freien Kopplungselemente 22 quasi "blind" vom Bediener in das feststehende Kopplungselement 32 geschleudert werden, wo sie selbsttätig gefangen werden.

In den Fig. 6a und 6b ist ein bevorzugtes Ausführungsbeispiel für die freien Kopplungselemente 22 gezeigt, wobei das freie Kopplungselement 22 durch einen flächigen Grundkörper 22a und eine Hinterschneidung 22b bzw. einen Vorsprung gebildet ist, welche dazu vorgesehen sind, sich mit dem feststehenden Kopplungselement 32 zu verhaken. Der Vorsprung 22b ist hier als abgewinkeltes Profil dargestellt, kann aber auch durch eine z.B. halbkreisförmige Geometrie gebildet sein, insbesondere über einen Umformprozess bei einem ursprünglich plan ausgeführten platten- bzw. blechartigen Grundkörper 22a. Der Grundkörper 22a kann über eine Aussparung 22c mit einem Gurt oder direkt mit einem freien Ende der Abdeckplane 20 verbunden werden. Das freie Kopplungselement 22 weist durch den Grundkörper 22a ein Eigengewicht auf und ist so mit einem Gurt verbunden, dass es frei an dem Gurt hängen kann und frei gegenüber dem Gurt verschwenkt werden kann. Durch das Eigengewicht kann dem freien Kopplungselemente 22 durch einen Bediener ein ausreichend großer Bewegungsimpuls gegeben werden, damit das freie Kopplungselement 22 um die Spanneinrichtung herum "geschleudert" werden kann und sich automatisch in das feststehende Kopplungselement 32, die insbesondere als Profilschiene ausgebildet ist, mit dem Vorsprung 22b einhaken kann.

Bevorzugt ist das freie Kopplungselement 22 über die Aussparung 22c mit dem Gurt 21 verbunden, indem der Gurt mit ausreichend Spiel durch die Aussparung 22c und um den Randbereich des Grundkörpers 22a geführt ist, wobei das freie Kopplungselement 22 Bewegungsspielraum gegenüber dem Gurt 21 hat. D.h., die von dem Gurt dabei gebildete Schlaufe ist so groß, dass sie ein Verschwenken des freien Kopplungselements 22 nicht behindert. Besonders bevorzugt ist das freie Kopplungselement 22 so ausgebildet, dass sein Massenschwerpunkt M um eine beträchtliche Länge d von der Aussparung 22c beabstandet ist, z.B. um eine Länge d im Bereich der halben Gesamtlänge. Hierdurch kann das freie Kopplungselement 22 gut in eine Schwenkbewegung gebracht werden. Durch das Eigengewicht des freien Kopplungselements 22 sowie den Abstand d zwischen Massenschwerpunkt M und der Halterung in der Aussparung 22c wird beim Herumwerfen des freien Kopplungselements 22 um die Spanneinrichtung das freie Ende 24 mitgenommen. Um zu vermeiden, dass sich das freie Kopplungselement 22 beim "blinden" Herumwerfen verdreht und nicht nur verschwenkt, sollte der Gurt bzw. das freie Kopplungselement 22 eine ausreichend große Breite b aufweisen.

Bei dem freien Kopplungselement 22 ist die Hinterschneidung 22b ferner in einem bestimmten Abstand zu dem Grundkörper 22a angeordnet, nämlich um die Tiefe t. Die Tiefe t ist in Abhängigkeit von der Ausgestaltung des feststehenden Kopplungselementes so gewählt, dass das freie Kopplungselement 22 schnell und sicher an das feststehende Kopplungselement 32 gekoppelt werden kann. Auch ist die Hinterschneidung 22b in einer bestimmten Länge x ausgeführt, welche mit der Ausgestaltung des feststehenden Kopplungselements 32 korrespondiert.

In den Fig. 7a und 7b ist jeweils ein feststehendes Kopplungselement 32 gezeigt, welches in der dargestellten Anordnung an der rechten Seite eines LKW oder Anhängers angeordnet ist, und in welches freie Kopplungselemente 22 eingehakt sind. Das feststehende Kopplungselement 32 ist an eine Ladeflächenvorrichtung 30 gekoppelt oder als Teil davon ausgebildet und ist durch einen Träger 32a und einen vorstehenden Randbereich 32b gebildet, wodurch es in der Art einer Profilleiste oder Schiene mit Nut ausgebildet ist. Der vorstehende Randbereich 32b bildet eine von dem Träger frei abstehende Kante oder eine Rille oder Leiste an dem Träger 32a und kann eine Außenkontur aufweisen, die mit der Geometrie einer Innenseite der freien Kopplungselemente 22 korrespondiert. Sind die freien Kopplungselemente 22 beispielsweise mit einer sich halbkreisförmig von dem Grundkörper 22a erstreckenden Hinterschneidung 22b ausgeführt, so kann die Außenseite des Trägers 32a bzw. Randbereichs 32b, an welcher die freien Kopplungselemente 22 zur Anlage kommen, ebenfalls eine runde, insbesondere halbkreisförmige Außenkontur aufweisen. Dies erleichtert das Anbringen, der freien Kopplungselemente 22 insbesondere das "blinde" Anbringen. Die Tiefe t des freien Kopplungselements 22 (vgl. Fig. 6a, 6b) ist jeweils so gewählt, dass die Hinterschneidung 22b den vorstehenden Randbereich 32b umgreifen kann, und die Länge x der Hinterschneidung 22b kann wahlweise so gewählt sein, dass nur ein unteres freies Ende der Hinterschneidung 22b an dem Träger aufliegt und nicht die gesamte Hinterschneidung 22b. Hierdurch kann ein Loslösen der freien Kopplungselemente 22 von dem feststehenden Kopplungselement 32 erleichtert werden, wenn die Abdeckplane 20 nicht verspannt ist.

In der Fig. 7a ist die Spanneinrichtung 10 gestrichelt angedeutet, da sie von der Ladeflächenvorrichtung 30 verdeckt wird. Über die Spanneinrichtung 10 ist die Abdeckplane 20 mit der Ladeflächenvorrichtung 30 verspannt, wobei drei freie Kopplungselemente 22 gezeigt sind, die in das feststehende Kopplungselement 32 eingehakt sind. Die Ladeflächenvorrichtung 30 ist schraffiert dargestellt, da der rechte Teil geschnitten ist, und das daran montierte feststehende Kopplungselement 32 nicht. Aus Fig. 7b geht detaillierter hervor, dass die Spanneinrichtung 10 ein bewegliches, expandierbares Element 11 aufweist, mittels welchem die Abdeckplane 20 verspannt werden kann, insbesondere indem das expandierbare Element 11 an ein freies Ende 24 der Abdeckplane 20 gepresst wird und die freien Kopplungselemente 22 dadurch in das feststehende Kopplungselement 32 eingehakt und daran unbeweglich fixiert werden. Die freien Kopplungselemente 22 umgreifen dabei einen vorstehenden Randbereich 32b des feststehenden Kopplungselements 32. Das freie Ende 24 muss nicht ganz um das bewegliche Element 11 geführt sein, es reicht vielmehr bereits aus, wenn es zumindest zur Hälfte um die nach unten weisende Mantelfläche des beweglichen Elements 11 geführt ist und dann nur noch über die Gurte 21 weiter um das bewegliche Element 11 geführt ist.

In der Fig. 7b und in der Fig. 8 ist ferner eine Pressfläche 11a an dem beweglichen Element 11 angedeutet, und es ist ersichtlich, dass die Pressfläche 11 a eine Größe aufweisen kann, die ca. die Hälfte der gesamten Oberfläche des beweglichen Elements 11 entspricht, je nachdem wie weit das freie Ende 24 der Abdeckplane um das bewegliche Element 11 geführt ist. Hierdurch kann eine große Kraftübertragungsfläche bereitgestellt werden und die resultierenden Zugkräfte innerhalb der Abdeckplane 20 können sich gut verteilen und bleiben vergleichsweise gering. In der Fig. 7b ist ferner ein mögliches Ausführungsbeispiel für ein Montageelement 12 gezeigt, wobei das Montageelement 12 als Verbindungsmittel ausgeführt ist, welches an einer Oberseite der Spanneinrichtung 10 angreift und die Oberseite der Spanneinrichtung 10 mit einer Unterseite der Ladeflächenvorrichtung 30 verbindet. Als Montageelement 12 können einzelne Clips oder Schrauben oder Rastmittel oder aber auch eine Schiene bzw. Nut zum Verbinden mit einer entsprechenden Schiene an der Ladeflächenvorrichtung vorgesehen sein.

In der Fig. 8 ist in einer Ansicht auf eine Unterseite einer Ladeflächenvorrichtung 30 gezeigt, auf welche Weise eine Spanneinrichtung 10 an die Ladeflächenvorrichtung 30 gekoppelt sein kann. Das bewegliche Element 11 der Spanneinrichtung 10 kann über Montageelemente 12 an die Ladeflächenvorrichtung 30 bzw. das feststehende Kopplungselement 32 gekoppelt sein. Die Montageelemente 12 können z.B. Gurte oder Bügel oder elastische Bänder sein, insbesondere mit einer dünnen Wandstärke, die um das bewegliche Element 11 gelegt sind. Es kann sich bei den Montageelementen 12 jedoch auch um Verbindungsmittel handeln, die allein an einer Oberseite des beweglichen Elements vorgesehen sind. Solche Verbindungsmittel können z.B. in die Außenhaut des beweglichen Elements 11 eingearbeitete Haken, Schlaufen oder Ösen sein, welche irgendwie an der Ladeflächenvorrichtung 30 befestigt sind. Die Spanneinrichtung 10 selbst kann über eine Kupplung 13 an einem oder beiden Enden (sofern die Spanneinrichtung, insbesondere das bewegliche Element 11 schlauchförmig ausgebildet ist) an die Ladeflächenvorrichtung 30 und/oder direkt an eine Druckluftversorgung des LKW gekuppelt sein. Die Abdeckplane 20 ist der Übersicht halber schraffiert dargestellt.

**Bezugszeichenliste:**

| | |
|---|---|
| 1 | Fahrzeug bzw. Fahrzeuganhänger |
| 1a | Ladefläche |
| 2 | Plane |
| 3 | Spanngurt |
| 4 | Übertotpunkt-Spanner |
| | |
| 10 | Spanneinrichtung |
| 11 | bewegliches Element |
| 11a | Pressfläche |
| 12 | Montageelement |
| 13 | Kupplung |
| | |
| 20 | Abdeckplane |
| 21 | Gurt |
| 22 | freies Kopplungselement (z.B. Haken) |
| 22a | Grundkörper |
| 22b | Hinterschneidung |
| 22c | Aussparung |
| 22d | untere Kante |
| 24 | freies Ende der Abdeckplane |
| 24a | unterer Rand der Abdeckplane |
| | |
| 30 | Ladeflächenvorrichtung |
| 32 | feststehendes Kopplungselement (z.B. Profilschiene) |
| 32a | Träger |
| 32b | vorstehender Randbereich |
| | |
| b | Breite des freien Kopplungselements |
| d | Abstand zwischen M und Aussparung 22c |
| t | Tiefe des freien Kopplungselements im Bereich der Hinterschneidung |
| x | Länge der Hinterschneidung |
| M | Massenschwerpunkt des freien Kopplungselements |

## Patentansprüche

1. Spanneinrichtung (10) zum Verspannen einer Abdeckplane (20) an der seitlichen Begrenzung einer Ladefläche eines Fahrzeugs, mit einem beweglichen Element (11) zum Erzeugen einer Spannung in der Abdeckplane (20), wobei das bewegliche Element (11) dazu ausgebildet ist, auf die Abdeckplane (20) eine Zugkraft derart auszuüben, dass die Abdeckplane (20) flächig verspannt wird,
**dadurch gekennzeichnet** t dass das beweglichen Element (11) eine variable Außenkontur aufweist.

2. Spanneinrichtung nach Anspruch 1, **dadurch gekennzeichnet, dass** das bewegliche Element (11) dazu ausgebildet ist, in montiertem Zustand der Spanneinrichtung unterhalb der Ladefläche angeordnet zu sein und die Abdeckplane (20) ausschließlich auf ihrer Innenseite zu kontaktieren.

3. Spanneinrichtung nach Anspruch 1 oder 2, **dadurch gekennzeichnet, dass** das bewegliche Element (11) in montiertem Zustand der Spanneinrichtung ortsfest mit einer Ladeflächenvorrichtung (30) verbunden ist und dazu ausgebildet ist, das Verspannen dadurch hervorzurufen, dass es die Abdeckplane (20) mit einer Pressfläche (11a) flächig kontaktiert und die Pressfläche (11a) auf einen vergrößerten Abstand zur Ladeflächenvorrichtung (30) bringt.

4. Spanneinrichtung nach einem der vorhergehenden Ansprüche, **dadurch gekennzeichnet, dass** sich das bewegliche Element (11) in montiertem Zustand der Spanneinrichtung entlang der Abdeckplane erstreckt.

5. Spanneinrichtung nach einem der vorhergehenden Ansprüche, **dadurch gekennzeichnet, dass** das bewegliche Element (11) durch Fluidbeaufschlagung expandierbar ist.

6. Spanneinrichtung nach einem der vorhergehenden Ansprüche, **dadurch gekennzeichnet, dass** das bewegliche Element (11) elastisch verformbar ist.

7. Spanneinrichtung nach einem der vorhergehenden Ansprüche, **dadurch gekennzeichnet, dass** sie eine Kupplung aufweist, über welche sie an eine Fluidversorgung eines Fahrzeugs kuppelbar ist.

8. Ladungssicherungssystem für ein Fahrzeug, mit einer Abdeckplane (20) und mit einer Spanneinrichtung (10) nach einem der Ansprüche 1 bis 7, wobei die Abdeckplane (20) freie Kopplungselemente (22) aufweist, die dazu ausgebildet sind, an der Ladefläche des Fahrzeugs verkoppelt zu werden.

9. System nach Anspruch 8, **dadurch gekennzeichnet, dass** die Abdeckplane (20) einen Abschnitt aufweist, an welchem das bewegliche Element (11) der Spanneinrichtung (10) zur Anlage kommt, um eine Spannkraft in die Abdeckplane (20) einzuleiten.

10. System nach Anspruch 8 oder 9, wobei eine Ladeflächenvorrichtung (30) ein feststehendes Kopplungselement (32) aufweist, an welches die freien Kopplungselemente (22) der Abdeckplane (20) koppelbar sind.

11. System nach Anspruch 10, **dadurch gekennzeichnet, dass** das feststehende Kopplungselement (32) als sich zumindest annähernd parallel zur Abdeckplane (20) erstreckende Schiene ausgebildet ist, welche ein Profil zur Aufnahme der freien Kopplungselemente (22) aufweist.
